(19) Europäisches Patentamt
European Patent Office
Office européen des brevets

(11) **EP 4 343 731 B1**

(12) **EUROPEAN PATENT SPECIFICATION**

(45) Date of publication and mention
of the grant of the patent:
**13.11.2024 Bulletin 2024/46**

(21) Application number: **23192182.6**

(22) Date of filing: **18.08.2023**

(51) International Patent Classification (IPC):
**G06N 3/0442** *(2023.01)* **G06N 3/0464** *(2023.01)*
**G06N 3/08** *(2023.01)* **G06N 3/045** *(2023.01)*
**G08G 1/01** *(2006.01)* **G08G 1/00** *(2006.01)*

(52) Cooperative Patent Classification (CPC):
**G06N 3/0442; G06N 3/0464; G06N 3/08;**
G06N 3/045; G08G 1/0129; G08G 1/202

(54) **METHOD AND SYSTEM FOR DELAY PREDICTION FOR SCHEDULED PUBLIC TRANSPORT USING MULTI ARCHITECTURAL DEEP LEARNING**

VERFAHREN UND SYSTEM ZUR VERZÖGERUNGSVORHERSAGE FÜR GEPLANTEN ÖFFENTLICHEN TRANSPORT UNTER VERWENDUNG VON MULTIARCHITEKTUR-TIEFENLERNEN

PROCÉDÉ ET SYSTÈME DE PRÉDICTION DE RETARD POUR UN TRANSPORT PUBLIC PROGRAMMÉ À L'AIDE D'UN APPRENTISSAGE PROFOND MULTI-ARCHITECTURE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **23.09.2022 IN 202221054665**

(43) Date of publication of application:
**27.03.2024 Bulletin 2024/13**

(73) Proprietor: **Tata Consultancy Services Ltd.
Mumbai 400 021, Maharashtra (IN)**

(72) Inventors:
• **REGIKUMAR, ROHITH**
**600113 Chennai, Tamil Nadu (IN)**
• **KASTHURIRAJAN, PRIYANGA**
**600113 Chennai, Tamil Nadu (IN)**
• **JAYAPRAKASH, RAJESH**
**600113 Chennai, Tamil Nadu (IN)**
• **RAMANUJAM, ARVIND**
**600113 Chennai, Tamil Nadu (IN)**

(74) Representative: **Goddar, Heinz J.
Boehmert & Boehmert
Anwaltspartnerschaft mbB
Pettenkoferstrasse 22
80336 München (DE)**

(56) References cited:
• **HUANG PING ET AL: "A deep learning approach for multi-attribute data: A study of train delay prediction in railway systems", INFORMATION SCIENCES, ELSEVIER, AMSTERDAM, NL, vol. 516, 25 December 2019 (2019-12-25), pages 234 - 253, XP085993233, ISSN: 0020-0255, [retrieved on 20191225], DOI: 10.1016/J.INS.2019.12.053**
• **CHEN SHUAI ET AL: "Train Delay Prediction based on a Multimodal Deep-learning Method", 2021 CHINA AUTOMATION CONGRESS (CAC), IEEE, 22 October 2021 (2021-10-22), pages 3241 - 3246, XP034100380, DOI: 10.1109/CAC53003.2021.9728179**
• **LIU HONGJIE ET AL: "Bus Arrival Time Prediction Based on LSTM and Spatial-Temporal Feature Vector", IEEE ACCESS, IEEE, USA, vol. 8, 8 January 2020 (2020-01-08), pages 11917 - 11929, XP011767679, DOI: 10.1109/ACCESS.2020.2965094**

**Description**

CROSS-REFERENCE TO RELATED APPLICATIONS AND PRIORITY

The present application claims priority to Indian application no. 202221054665, filed on September 23, 2022.

TECHNICAL FIELD

The disclosure herein generally relates to the field of public transport management, and, more particularly, to a method and system for delay prediction of a queried vehicle running in a scheduled public transport.

BACKGROUND

Public transports are the backbone of the infrastructure and operation of any modern city. It is essential to provide accurate information of running status of all the vehicles of the public transport to its users. Being able to account for delays in scheduled public transit networks is crucial for public transit operators to perform timetabling and dispatch operations, and for informing passengers about changes in their trips. In addition, handling delays are crucial to a well-oiled transport network. Knowing them in advance allows operators to perform necessary dispatches, as well as make modifications to future timetables to mitigate delay.

As of present, there are large quantities of historical and real-time public transportation data that are readily available, most of which are provided by agencies working with the companies that run these networks. The data includes timetables and live-boards, which tell us when a vehicle has arrived at and departed from a stop, along with delays experienced. Historical data can be utilized to predict the delay of vehicles. This approach can be applied to networks that operate with scheduled transport, such as trains, buses, and flights. There are few solution exist in the art, but they do not predict the delay accurately. There is a lack of a generalizable solution to this problem as of the present.

HUANG PING ET AL: "A deep learning approach for multi-attribute data: A study of train delay prediction in railway systems", INFORMATION SCIENCES, ELSEVIER, AMSTERDAM, NL, vol. 516, 25 December 2019 (2019-12-25), pages 234-253, discloses a deep learning approach (specifically a model named CLF-Net) that combines 3-dimensional convolutional neural networks (3DCNN), long short-term memory (LSTM) recurrent neural network, and fully connected neural network (FCNN) architectures to address the challenges aroused by presence of multi-attribute data in modelling dynamic systems. The CLF-Net uses individual factors with different attributes as input to achieve better predictions. The spatiotemporal features are fed into the 3D CNN, the time-series variables are fed into the LSTM, and the non-time-series factors are fed into the FCNN, respectively.

CHEN SHUAI ET AL: "Train Delay Prediction based on a Multimodal Deep-learning Method", 2021 CHINA AUTOMATION CONGRESS (CAC), IEEE, 22 October 2021 (2021-10-22), pages 3241-3246, discloses a delay prediction model based on a multi-modal deep learning framework. The model considers the temporal and spatial characteristics and time-series characteristics of train operation, and then the Transformer and the three-dimensional convolutional neural network (3D CNN) are adopted to independently extract and merge these features. Specifically, the Transformer with the attention mechanism solves the interference mechanism among trains and stations on the delay of the brain of interest. At the same time, 3D CNN is used to extract the temporal and spatial data characteristics of trains. Finally, the real operation data of the Beijing Railway Administration HSR network is adopted to verify the effectiveness of the proposed model.

LIU HONGUJIE ET AL: "Bus Arrival Time Prediction Based on LSTM and Spatial-Temporal Feature Vector", IEEE ACCESS, IEEE, USA, vol. 8, 8 January 2020 (2020-01-08), pages 11917-11929, discloses an arrival prediction method based on temporal vector and another arrival prediction method based on spatial vector to solve the problems of remote dependence of bus arrival and road incidents, respectively. Combining the advantages of the two prediction models, this prior art proposes a long short-term memory (LSTM) and Artificial neural networks (ANN) comprehensive prediction model based on spatial-temporal features vectors. The long-distance arrival-to-station prediction is realized from the dimension of time feature, and the short-distance arrival-to-station prediction is realized from the dimension of spatial feature, thereby realizing the bus-to-station prediction.

SUMMARY

Embodiments of the present disclosure present technological improvements as solutions to one or more of the above-mentioned technical problems recognized by the inventors in conventional systems. The invention is set out in the appended set of claims.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 shows a block diagram of a system for delay prediction for scheduled public transport according to some embodiments of the present disclosure.
FIG 2 shows a block diagram of a first architecture of Fully Connected Neural Network (FCNN), a second architecture of a Long Short Term Memory (LSTM) network and a third architecture of a 3D Convolutional Neural Network (3DCNN) according to some embodiments of the present disclosure.
FIG. 3A-3G shows a plurality of final encoding models according to some embodiments of the present disclosure.
FIG. 4A-4B is a flowchart of a method for delay prediction for scheduled public transport according to some embodiments of the present disclosure.

DETAILED DESCRIPTION OF EMBODIMENTS

Exemplary embodiments are described with reference to the accompanying drawings. In the figures, the leftmost digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.
It is essential to provide accurate information of running status of all the vehicles of the public transport to its users. Being able to account for delays in scheduled public transit networks is crucial for public transit operators to perform timetabling and dispatch operations, and for informing passengers about changes in their trips.
As of present, there are large quantities of historical and real-time public transportation data that are readily available on the internet, most of which are provided by agencies working with the companies that run these networks. The data includes timetables and live-boards, which tell us when a vehicle has arrived at and departed from a stop, along with delays experienced. Historical data can be utilized to predict the delay of vehicles. This approach can be applied to networks that operate with scheduled transport, such as trains, buses, and flights. There are few solution exist in the art, but they do not predict the delay accurately. There is a lack of a generalizable solution to this problem as of the present.
The present disclosure provides a system and method for delay prediction for scheduled public transport. The present disclosure utilizes a novel deep learning technique that learns how to accurately predict delay that a vehicle may experience at stops while on its journey. The deep learning uses a multi-architectural approach that has an added edge over the standard learning approach in the scope of public transit delay prediction. The models are able to predict delays with less than half a minute of error, which is better than the current state of the art and is more than enough for public transit operators to make decisions. The splitting of the features into spatial, temporal and spatio-temporal and the use of the different arrangement of the networks make it unique and testing has proved that the model can be used over a long period of time across a whole network.
The multi-architectural deep learning approach has been used to predict the delays of a queried vehicle in the scheduled public transport. For this, historical operational data is gathered about the public transport in question. The historical operational data is transformed into temporal, and spatiotemporal data. While, the spatial data is obtained from geographical information. From the spatial, and temporal components of the data, the required features are extracted to make the training and testing data sets.
The present disclosure uses different combinations of neural networks architectures that are suited for handling specific types of features. By feeding the features to networks that are suited to handling them and by utilizing these networks together to find the delay value using regression. The regressor model uses a state of the art neural network architecture for delay prediction, in which the neural network is composed of three separate kinds, each of which are good at dealing with a specific kind of data. One component is the Fully Connected Neural Network (FCNN), which is good at learning from static features i.e. the spatial component of the feature vector, the second is the Long Short Term Memory (LSTM) network which is good at learning from temporal features, and the third is the 3D Convolutional Neural Network (3DCNN) which is good at learning from spatiotemporal features. Learned encoding from each are fed to another FCNN to produce the predicted delay value. It should be appreciated that the final prediction is depending upon the architecture. Encodings from one architecture is passed to another or encoding from multiple architectures are combined together to produce the predicted delay value
Several variations of the regressor network have been trained with respect to the information flow from one neural network component to another. Once the networks are trained, the regressor can be used to predict for the test data and future inputs. The training data is fed in to the network and a loss function, such as RMSE, is used to evaluate how well the network models the data.

The feature vector needs to be constructed for any future inputs, and then fed into the regressor network, which will then give a prediction for the arrival delay at the current stop. Also, by training on large amounts of data that was collected for a long period of time across a large geography, the solution has been seen to be generalizable.

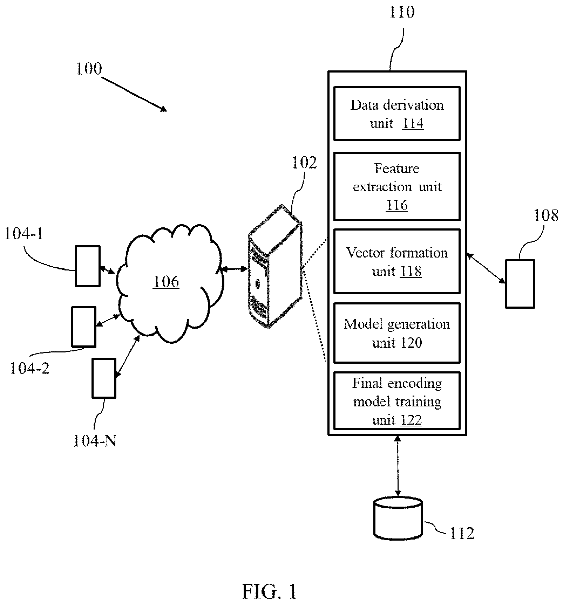

Referring now to the drawings, and more particularly to FIG. 1 through FIG. 4B, where similar reference characters denote corresponding features consistently throughout the figures, there are shown preferred embodiments and these embodiments are described in the context of the following exemplary system and/or method.

According to an embodiment of the disclosure, FIG. 1 illustrates a block diagram a system 100 for delay prediction for scheduled public transport. In an embodiment, the network 106 may be a wireless or a wired network, or a combination thereof. In an example, the network 106 can be implemented as a computer network, as one of the different types of networks, such as virtual private network (VPN), intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network 106 may include a variety of network devices, including routers, bridges, servers, computing devices, storage devices. The network devices within the network 106 may interact with the system 100 through communication links.

The system 100 may be implemented in a workstation, a mainframe computer, a server, and a network server. In an embodiment, the computing device 102 further comprises one or more hardware processors 108, one or more memory 110, hereinafter referred as a memory 110 and a data repository 112, for example, a repository 112. The memory 110 is in communication with the one or more hardware processors 108, wherein the one or more hardware processors 108 are configured to execute programmed instructions stored in the memory 110, to perform various functions as explained in the later part of the disclosure. The repository 112 may store data processed, received, and generated by the system 100. The memory 110 further comprises a plurality of units for performing various functions. The plurality of units comprises a data derivation unit 114, a feature extraction unit 116, a vector formation unit 118, a model generation unit 120 and a final encoding model training unit 122 as shown in the block diagram of FIG. 1.

The system 100 supports various connectivity options such as BLUETOOTH®, USB, ZigBee and other cellular services. The network environment enables connection of various components of the system 100 using any communication link including Internet, WAN, MAN, and so on. In an exemplary embodiment, the system 100 is implemented to operate as a stand-alone device. In another embodiment, the system 100 may be implemented to work as a loosely coupled device to a smart computing environment. The components and functionalities of the system 100 are described further in detail.

According to an embodiment of the disclosure, the problem statement can be defined as follows: With the help of following parameters the disclosure is predicting the arrival delay of queried vehicle at the current stop using multi-architectural deep learning models.

- Geospatial information about the stops covered so far by the query vehicle
- Scheduled and actual arrival and departure times of the query vehicle at those stops, and of other vehicles that have passed through the same stops before the query vehicle

If the operational data on several vehicular journeys of the same mode through a series of stops $S_1$, $S_2$,... $S_n$ is available, then the delay of a queried vehicle of the same mode would experience at a future stop $S_{n+k}$, where $k \geq 1$ can be predicted. In the present example, k was chosen to be 1, although one could choose to predict more stops into the future, with varying effect. Also, it is not enough to just know about the queried vehicle and the stops it has covered; it also depends on other vehicles of the same mode that ran through these stops before the current vehicle. The target variable y is the arrival delay experienced by a vehicle at the current stop.

According to an embodiment of the disclosure, the system 100 is configured to receive a historical data corresponding to a plurality of vehicles deployed on a network of the scheduled public transport, wherein a route in the network comprises a queried vehicle for which an expected arrival delay is to be predicted on a current stop.

According to an embodiment of the disclosure, the system 100 comprises the data derivation module 114. The data derivation module 114 is configured to derive spatial data, temporal data and spatio-temporal data from the received historical data corresponding to the plurality of vehicles and a plurality of stops present along the route. The spatial data refers to geospatial information about the stations, such as the distances between any consecutive stations. The temporal data refers to information that ties vehicles of the same mode and stations together, such as the arrival and departure times, as well as the arrival and departure delay experienced at each station. Temporal data is always defined with respect to a vehicle undergoing a trip. The trip for which future delays to be predicted is denoted by $T_0$ and will be referred to as the current vehicle.

According to an embodiment of the disclosure, the system 100 identifies two windows, i.e., a first window and a second window. The first window is of a set of stops from amongst the plurality of stops, wherein the set of stops are stops from where a trip of the queried vehicle has already completed. The second window is of a set of vehicles of the current stop, wherein the set of vehicles of the current stop has passed through all the stops in the first window before the queried vehicle, the set of vehicles are of a same mode that are in the second window based on a type of methods. The type of methods comprises a route-based method and a trip-based method. In the route-based method, the set of vehicles of the same mode has covered the same set of stops as the queried vehicle before the queried vehicle. The trip-based method, where the set of vehicles of the same mode has covered the same set of stops in the first window considered as the queried vehicle before the queried vehicle.

As mentioned earlier, the problem requires that trips by other vehicles of the same mode that have passed through the same stations as $T_0$ are considered to better gauge delays. For this, trip of the vehicle and what stations to inspect need to be defined. To do so, windows/frames over the network's current and previous states are applied. The first window is applied over stations, where for the current stop $S_{n+1}$ whose delay is to be predicted, $S_{(n-w_s)}$, $S_{(n-w_s+1)}$ ··· $S_n$ stations were picked where the trip for the vehicle has already stopped. Data from these stations will be considered later to extract features. The second window determines what trips within the same mode are considered with respect to $T_0$. The route-based and the trip-based are denoted as $T_{wt}^r, T_{wt-1}^r, \cdots$ and $T_{wt}^t, T_{wt-1}^t, \cdots$ respectively.

In tandem, the queried vehicle $T_0$ is considered, then stations S is looked, and then features are extracted. In an example, stations in the window are consecutive i.e. one occurs right after the other in the schedule. It should be appreciated that the stations could be picked up in a different way, such as a random set of stations that $T_0$ has covered so far. With respect to a few experiments with this random setup, consecutive stops seem to produce better results. However, in case there isn't data available for a few stops within that sequence, an alternative way of picking up stops may be useful.

According to an embodiment of the disclosure, the system 100 comprises the feature extraction unit 116. The feature extraction unit 116 is configured to extract a plurality of spatial features for each stop in the first window; a plurality of temporal features for each stop in the first window covered by vehicles in the second window, and the plurality of spatio-temporal features.

The plurality of spatial features comprises a distance between two consecutive stops, and a station vehicle capacity. The distance is between the two stops along the path that vehicles take to travel between the two stations. For a stop $S_i$, the distance is calculated between $S_{i-1}$ and $S_i$. It is denoted by $dist(S_{i-1}, S_i)$. The station vehicle capacity captures the physical station capacity for vehicles entering and leaving the station. For trains, this is defined as the number of tracks in a station. For other modes, such as bus, it could be the width of the station indicating how many buses can stop there simultaneously. If no such information exists, this can be left as 0. This is defined with respect $Si$, and it is denoted by *capacity ($S_i$)*. The spatial features for each stop in the window starting from $S_{n-w_s}$, and the feature vector so formed is denoted by $x_S$, with dimensions of ($2*w_s$).

The plurality of temporal features comprises a scheduled travel time between all consecutive stops in the first window before the current stop, a scheduled dwell time at a stop, and a scheduled interval with preceding vehicle, a scheduled number of stops between a two consecutive stops in the first window. In addition, the plurality of temporal features also comprises the actual value of the travel time between all the consecutive stops before the current stop, the actual dwell time, and the actual interval with preceding vehicle at a stop. Each of the temporal features are computed for the current vehicle as well as the route-based and/or trip-based vehicle, for each stop in the first window.

In an embodiment, the actual travel time takes arrival and departure delays into consideration. For stop $S_i$, travel time is calculated between $S_{i-1}$ and $S_i$. The travel time is difference between the arrival time at stop $Si$ and departure time at stop $S_{i-1}$. The scheduled travel time is a pre-decided time taken by the vehicle between two stops, while the actual travel time is an actual time taken by the vehicle between two stops. For a vehicle V, the scheduled travel time and the actual travel time is denoted by *sch_ttime(V, $S_{i-1}$; $Si$)* and *act_ttime(V, $S_{i-1}$; $S_i$)* respectively. The scheduled dwell time is the difference of the scheduled departure and arrival at a stop. The actual dwell time is the difference of the actual departure and the actual arrival at a stop. The scheduled dwell time and the actual dwell time is calculated at $Si$, and is denoted by *sch_dtime(V, $S_i$)* and *act_dtime(V, $S_i$)*, respectively. For Scheduled/Actual interval with preceding vehicle, a vehicle $V_{pc}$ must be picked which is called as the preceding vehicle. This vehicle stopped at and departed from the stop, right before the vehicle V. The scheduled interval with preceding vehicle is then calculated as the difference of the scheduled departure time of vehicle V at the station, and the scheduled departure time of vehicle $V_{pc}$. The actual interval with preceding vehicle takes into account the departure delay experienced. The scheduled and the actual interval with preceding vehicle is calculated at $S_i$, and is denoted by *sch_ptime(V, $V_{pc}$, $S_i$)* and *act_ptime(V, $V_{pc}$, $S_i$)* respectively. The scheduled number of stops are stops that occurred between the two stops in the first window, and is denoted by *sstops(V, $S_{i-1}$, $S_i$)*.

The plurality of spatio-temporal features comprises an arrival delay and a departure delay for each of the plurality of vehicles and for each of the plurality of stops in the first window. The arrival delay is denoted by *arr_delay(V,*

$S_i$). The departure delay is denoted by *dep_delay(V, $S_i$)*.

According to an embodiment of the disclosure, the system 100 comprises the vector formation unit 118. The vector formation unit 118 is configured to form a spatial feature vector ($x_S$) of a dimension of twice the number of stops in the first window using the plurality of spatial features, a temporal feature vector using the plurality of temporal features, and a spatio-temporal feature vector using a plurality of spatio-temporal features.

To form the temporal feature vector, the vehicle is chosen from the second window, and the above temporal features are calculated for each stop in the first window starting from $S_{n-w_s}$. The features are then arranged in the order of route-based vehicles, trip-based vehicle, and then the current vehicle. The feature vector so formed is denoted by $x_T$. It has the dimensions ($7 \times w_s \times w_v$).

To form the spatiotemporal feature vector, the plurality of spatio-temporal features is stacked into cubes. The spatio-temporal feature vector so formed is denoted by $x_{ST}$ and has the dimensions ($4 \times w_s \times w_v \times 1$).

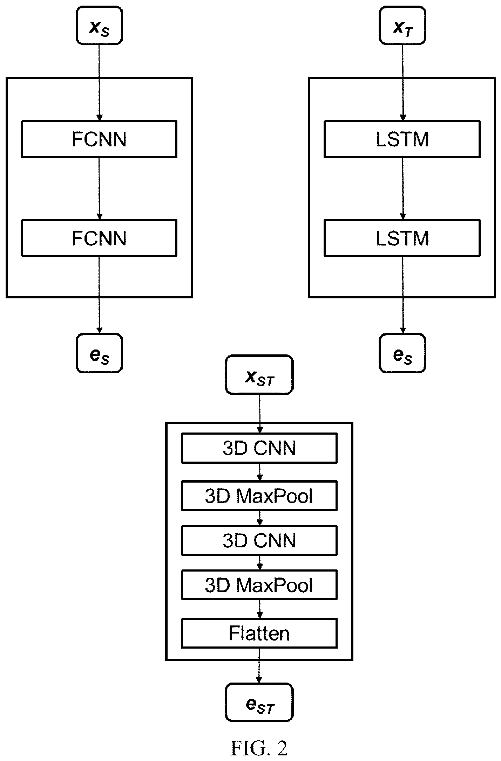

According to an embodiment of the disclosure, the system comprises the model generation module 120. The model generation module 120 is configured to generate a first architecture of Fully Connected Neural Network (FCNN) using the spatial feature vector, a second architecture of a Long Short Term Memory (LSTM) network using the temporal feature vector and a third architecture of a 3D Convolutional Neural Network (3DCNN) using the spatio-temporal feature vector. The block diagrams of the first architecture, the second architecture and the third architecture are shown in FIG. 2. Thus, y is a function of the spatial vector, the temporal vector and the spatio-temporal vector as shown in equation (1).

$$f(x_S,\ x_T,\ x_{ST}) = y \ ............ \ (1)$$

where y is the delay at the current stop.

Equation (1) above describes a standard regression problem. Given the target variable y and the predicted variable $\hat{y}$ that the regression model outputs, the goal of the model is to reduce the RMSE/L2 loss using the equation (2).

$$L_{L2} = \ \sqrt{\frac{1}{n}\sum_{i=1}^{n}(y_i - \hat{y}_i)^2} \ ............ \ (2)$$

According to an embodiment of the disclosure, the system 100 comprises the final encoding model training unit 122. The final encoding model training unit 122 is configured to train a plurality of final encoding models provided a plurality of combinations of the first architecture, the second architecture and the third architecture.

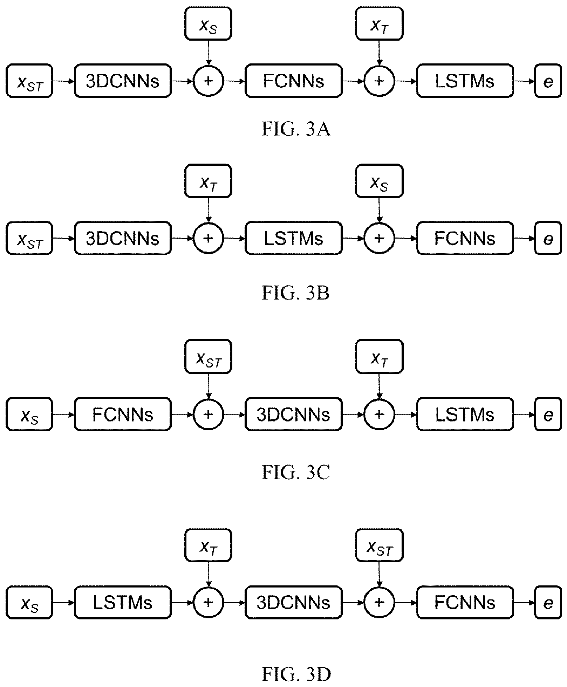

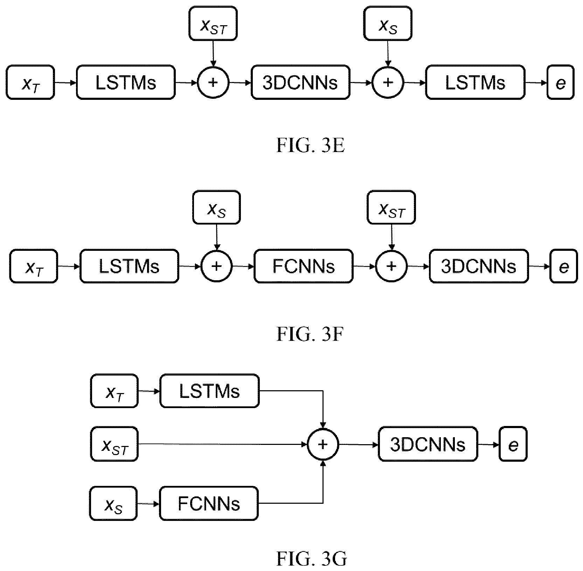

FIG. 3A-3G depicts the different model architecture of the plurality of final encoding models according to some embodiment of the present disclosure. In an example a total of seven final encoding models are generated. The architecture can be broken down into three specialized blocks: One consisting of fully connected layers which deal with spatial data, the second consisting of LSTMs which deal with temporal data, and the last consisting of 3D CNNs which deal with spatio-temporal data. The blocks are designed to specifically target these three components. They produce an encoding $e_X$ which is further propagated to get $\hat{y}$.

Six out of seven are permutations that deal with connecting the specialized blocks in series, whereas the last has two blocks in parallel. The idea is that information from one block may be useful in transforming the feature vector of another block, similar to what happens in residual networks. It is important to note is that the encoding given by each layer has to have a dimension that can be reshaped such that it can be concatenated with the next input feature. For example, in FIG. 3D, the encoding $e_S$ from the FCNN block has to be reshaped into ($7 \times w_s \times w_v$) dimensions in order to be concatenated with $x_T$. At the end of all three blocks, the resultant encoding e is put through another FCNN which then gives $\hat{y}$.

According to an embodiment of the disclosure, the system 100 is configured to choose a final encoding model from amongst the plurality of final encoding model based on accuracy of each of the plurality of final encoding models. It should be appreciated that in an example, a mean accuracy error can be calculated to check the accuracy of the models. And the delay for the queried vehicle is predicted at the current stop using the chosen final encoding model.

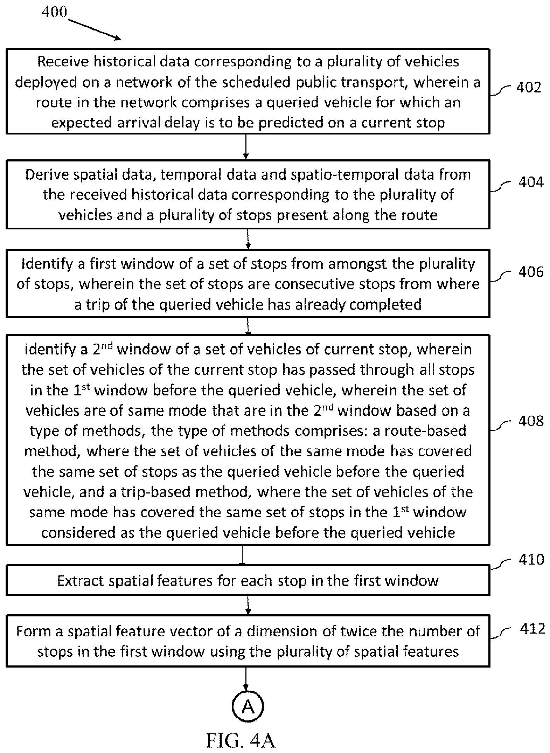

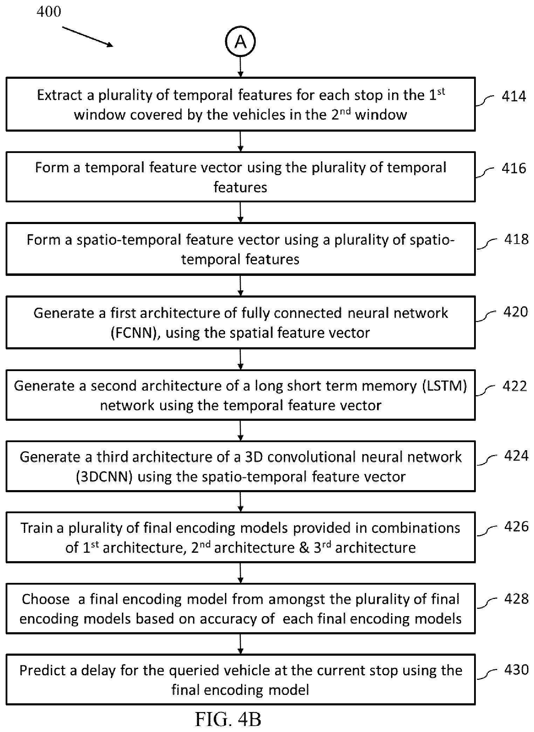

FIG. 4A-4B illustrates a flow chart of a method 400 for delay prediction for scheduled public transport, in accordance with an example embodiment of the present disclosure. The method 400 depicted in the flow chart may be executed by a system, for example, the system 100 of FIG. 1. In an example embodiment, the system 100 may be embodied in the computing device.

Operations of the flowchart, and combinations of operations in the flowchart, may be implemented by various means, such as hardware, firmware, processor, circuitry and/or other device associated with execution of software including one or more computer program instructions. For example, one or more of the procedures described in various embodiments may be embodied by computer program instructions. In an example embodiment, the computer program instructions, which embody the procedures, described in various embodiments may be stored by at least one memory device of a system and executed by at least one processor in the system. Any such computer program instructions may be loaded onto a computer or other programmable system (for example, hardware) to produce a machine, such that the resulting computer or other programmable system embody means for implementing the operations specified in the flowchart. It will be noted herein that the operations of the method 400 are described with help of system 100. However, the operations of the method 400 can be described and/or practiced by using any other system.

Initially at step 402 of the method 400, historical data is received corresponding to a plurality of vehicles deployed on a network of the scheduled public transport, wherein a route in the network comprises the queried vehicle for which an expected arrival delay is to be predicted on a current stop. In the next step 404, spatial data, temporal data and spatio-temporal data is derived from the received historical data corresponding to the plurality of vehicles and a plurality of stops present along the route.

At step 406 of the method 400, the first window of a set of stops is identified from amongst the plurality of stops, wherein the set of stops are stops from where a trip of the queried vehicle has already completed. At step 408, the second window of the set of vehicles of the current stop is identified, wherein the set of vehicles of the current stop has passed through all the stops in the first window before the queried vehicle, wherein the set of vehicles are of a same mode that are in the second window based on a type of methods. The type of methods comprises a route-based method and a trip-based method. The route-based method is where the set of vehicles of the same mode has covered the same set of stops as the queried vehicle before the queried vehicle. The trip-based method, where the set of vehicles of the same mode has covered the same set of stops in the first window considered as the queried vehicle before the queried vehicle.

At step 410 of the method 400, the plurality of spatial features is extracted for each stop in the first window. Further at step 412, the spatial feature vector of a dimension of twice the number of stops in the first window is formed using the plurality of spatial features. At step 414, the plurality of temporal features is extracted for each vehicle in the second window. Further at step 416, the temporal feature vector is formed using the plurality of temporal features. In the next step 418, the spatio-temporal feature vector is formed using a plurality of spatio-temporal features.

Further at step 420 of the method 400, the first architecture of Fully Connected Neural Network (FCNN) is generated using the spatial feature vector. At step 422 the second architecture of a Long Short Term Memory (LSTM) network is generated using the temporal feature vector. And at step 424, the third architecture of a 3D Convolutional Neural Network (3DCNN) is generated using the spatio-temporal feature vector.

At step 426 of the method 400, the plurality of final encoding models provided in the plurality of combinations of the first architecture, the second architecture and the third architecture, is trained. At step 428, the final encoding model is chosen from amongst the plurality of final encoding model based on accuracy of each of the plurality of final encoding models. And finally, at step 430, the delay is predicted for the queried vehicle at the current stop using the final encoding model.

According to an embodiment of the disclosure, the system 100 can also be explained with the help of experimental results.

Data was obtained from Infrabel's Open data raw punctuality data, which provides liveboard data for each year. It contains information on what trains arrived at and departed from a station, and also the geographical information that could be retrieved from a service provider or OpenGIS data. 2018 data was used for training, and 2019 data used for testing. The data was first rearranged into a required format, where the schedule is chunked into overlapping $w_s$ sized stop information for each train in the dataset. Because of the following reasons, a few chunks had to be removed from the data. Like, instances of negative or zero actual travel time, instances of negative actual dwell time, missing geographical information and negative arrival, or departure, delays.

Erroneous information in the dataset paved way for the first three kinds of removal. Windows with negative delay were removed as predicting positive delay is of interest, which is more detrimental. Once cleaned, the windows are then processed for each feature vector. To obtain $x_T$ and $x_{ST}$, the previous trip-based and/or route-based trains need to be found, which can be done by comparing the current train's window of information with other windows in the data that have the same set of stops.

For the purposes of the present experiments, the window sizes are $w_s \in \{3, 5\}$ and $w_t \in \{3, 5\}$. For $w_t = 3$, either the route-based or trip-based trains were taken, but not both. Each of the architectures present in TABLE 1 were trained for 60 epochs each with the Adam optimizer. The hyper parameters were tuned after multiple runs.

The present model while being more generalizable is also trained on a much larger network than other existing methods, most of which are trained on single corridors. Therefore, the present model performs better considering the scope of the setting. The mean absolute error (MAE) obtained for the various configurations and models have been listed in TABLE 1.

TABLE 1

| Encoder-decoder Architecture | $w_s$ | $w_t$ | Type of trains | Mean absolute error |
|---|---|---|---|---|
| STSpaTem | 3 | 3 | Route | 0.481 |
| | 3 | 3 | Trip | 0.462 |
| | 3 | 5 | Both | 0.482 |
| | 5 | 3 | Route | 0.45 |
| | 5 | 3 | Trip | 0.49 |
| | 5 | 5 | Both | 0.473 |
| SSpaTemT | 3 | 3 | Route | 0.438 |
| | 3 | 3 | Trip | 0.447 |
| | 3 | 5 | Both | 0.439 |
| | 5 | 3 | Route | 0.475 |
| | 5 | 3 | Trip | 0.473 |
| | 5 | 5 | Both | 0.46 |
| SpaTemTS | 3 | 3 | Route | 0.459 |
| | 3 | 3 | Trip | 0.455 |
| | 3 | 5 | Both | 0.454 |
| | 5 | 3 | Route | 0.484 |
| | 5 | 3 | Trip | 0.48 |
| | 5 | 5 | Both | 0.482 |
| SpaTemST | 3 | 3 | Route | 0.438 |
| | 3 | 3 | Trip | 0.444 |
| | 3 | 5 | Both | 0.436 |
| | 5 | 3 | Route | 0.462 |
| | 5 | 3 | Trip | 0.461 |
| | 5 | 5 | Both | 0.476 |
| TSpaTemS | 3 | 3 | Route | 0.44 |
| | 3 | 3 | Trip | 0.437 |
| | 3 | 5 | Both | 0.437 |
| | 5 | 3 | Route | 0.458 |
| | 5 | 3 | Trip | 0.446 |
| | 5 | 5 | Both | 0.448 |
| TSSpaTem | 3 | 3 | Route | 0.402 |
| | 3 | 3 | Trip | 0.398 |
| | 5 | 3 | Trip | 0.417 |
| | 5 | 5 | Both | 0.413 |
| TSSpaTem Parallel | 3 | 3 | Route | 0.406 |
| | 3 | 3 | Trip | 0.411 |
| | 5 | 3 | Route | 0.424 |
| | 5 | 5 | Both | 0.4 |

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem related to accurate prediction of a vehicle in a scheduled public transport. The embodiment thus provides a method and a system for delay prediction for scheduled public transport.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

**1.** A processor implemented method (400) for delay prediction for scheduled public transport, the method comprising:

receiving, via a user interface (104), historical data corresponding to a plurality of vehicles deployed in a network of the scheduled public transport, wherein a route in the network comprises a queried vehicle for which an expected arrival delay is to be predicted on a current stop (402);
deriving, via one or more hardware processors (108), spatial data, temporal data and spatio-temporal data from the received historical data corresponding to the plurality of vehicles and a plurality of stops present along the route (404);

identifying, via the one or more hardware processors (108), a first window of a set of stops from amongst the plurality of stops, wherein the set of stops are stops from where a trip of the queried vehicle has already completed (406);

identifying, via the one or more hardware processors (108), a second window of a set of vehicles of the current stop, wherein the set of vehicles of the current stop has passed through all the stops in the first window before the queried vehicle, wherein the set of vehicles are of a same mode that are in the second window based on a type of methods, wherein the type of methods comprises:

a route-based method, where the set of vehicles of the same mode has covered the same set of stops as the queried vehicle before the queried vehicle, and
a trip-based method, where the set of vehicles of the same mode has covered the same set of stops in the first window considered as the queried vehicle before the queried vehicle (408);

extracting, via the one or more hardware processors (108), a plurality of spatial features for each stop in the first window (410);

forming, via the one or more hardware processors (108), a spatial feature vector of a dimension of twice the number of stops in the first window using the plurality of spatial features (412);

extracting, via the one or more hardware processors (108), a plurality of temporal features for each stop in the first window covered by vehicles in the second window (414);

forming, via the one or more hardware processors (108), a temporal feature vector using the plurality of temporal features (416);

forming, via the one or more hardware processors (108), a spatio-temporal feature vector using a plurality of spatio-temporal features (418);

generating, via the one or more hardware processors (108), a first architecture of Fully Connected Neural Network 'FCNN', using the spatial feature vector (420);

generating, via the one or more hardware processors (108), a second architecture of a Long Short Term Memory 'LSTM' network using the temporal feature vector (422);

generating, via the one or more hardware processors (108), a third architecture of a 3D Convolutional Neural Network '3DCNN' using the spatio-temporal feature vector (424);

training, via the one or more hardware processors (108), a plurality of final encoding models provided in a plurality of combinations of the first architecture, the second architecture and the third architecture; (426)

choosing, via the one or more hardware processors (108), a final encoding model from amongst the plurality of final encoding models based on accuracy of each of the plurality of final encoding models (428); and

predicting, via the one or more hardware processors (108), a delay for the queried vehicle at the current stop using the final encoding model (430).

2. The processor implemented method of claim 1 wherein, the plurality of temporal features is arranged in the order of route-based vehicles, trip-based vehicles, and the queried vehicle, wherein the arrangement results in the formation of the temporal feature vector.

3. The processor implemented method of claim 1, wherein the plurality of spatial features comprises a distance between two consecutive stops, and a station vehicle capacity.

4. The processor implemented method of claim 1, wherein the plurality of temporal features comprises a scheduled travel time between all consecutive stops in the first window before the current stop, a scheduled dwell time at a stop, a scheduled interval with preceding vehicle, a scheduled number of stops between a two consecutive stops in the first window, an actual travel time, an actual dwell time, and an actual interval with preceding vehicle for all consecutive stops in the first window.

5. The processor implemented method of claim 1, wherein the plurality of spatio-temporal features comprises an arrival delay and a departure delay for each of the plurality of vehicles and for each of the plurality of stops, and wherein the plurality of combinations comprises seven combinations including six combinations have permutation dealing with connecting the first architecture, the second architecture and the third architecture in series and one combination has two models in parallel and one in series.

6. A system (100) for delay prediction for scheduled public transport, the system comprises:

a user interface (104) for receiving historical data corresponding to a plurality of vehicles deployed on a network of the scheduled public transport, wherein a route in the network comprises a queried vehicle for which an expected arrival delay is to be predicted on a current stop;
one or more hardware processors (108);
a memory (110) in communication with the one or more hardware processors, wherein the one or more first hardware processors are configured to execute programmed instructions stored in the one or more first memories, to:

derive spatial data, temporal data and spatio-temporal data from the received historical data corresponding to the plurality of vehicles and a plurality of stops present along the route;
identify a first window of a set of stops from amongst the plurality of stops, wherein the set of stops are stops from where a trip of the queried vehicle has already completed;
identify a second window of a set of vehicles of the current stop, wherein the set of vehicles of the current stop has passed through all the stops in the first window before the queried vehicle, wherein the set of vehicles are of a same mode that are in the second window based on a type of methods, wherein the type of methods comprises:

a route-based method, where the set of vehicles of the same mode has covered the same set of stops as the queried vehicle before the queried vehicle, and
a trip-based method, where the set of vehicles of the same mode has covered the same set of stops in the first window considered as the queried vehicle before the queried vehicle;

extract a plurality of spatial features for each stop in the first window;
form a spatial feature vector of a dimension of twice the number of stops in the first window using the plurality of spatial features;
extract a plurality of temporal features for each stop in the first window covered by vehicles in the second window;
form a temporal feature vector using the plurality of temporal features;
form a spatio-temporal feature vector using a plurality of spatio-temporal features;
generate a first architecture of Fully Connected Neural Network 'FCNN', using the spatial feature vector;
generate a second architecture of a Long Short Term Memory 'LSTM' network using the temporal feature vector;
generate a third architecture of a 3D Convolutional Neural Network '3DCNN' using the spatio-temporal feature vector;
train a plurality of final encoding models provided in a plurality of combinations of the first architecture, the second architecture and the third architecture;
choose a final encoding model from amongst the plurality of final encoding models based on accuracy of each of the plurality of final encoding models; and
predicting a delay for the queried vehicle at the current stop using the final encoding model.

7. The system of claim 6, wherein the plurality of spatial features comprises a distance between two consecutive stops, and a station vehicle capacity.

8. The system of claim 6, wherein the plurality of temporal features comprises a scheduled travel time between all consecutive stops in the first window before the current stop, a scheduled dwell time at a stop, a scheduled interval with preceding vehicle, a scheduled number of stops between a two consecutive stops in the first window, an actual travel time, an actual dwell time, and an actual interval with preceding vehicle for all consecutive stops in the first window.

9. The system of claim 6, wherein the plurality of spatio-temporal features comprises an arrival delay and a departure delay for each of the plurality of vehicles and for each of the plurality of stops, and wherein the plurality of combinations comprises seven combinations including six combinations have permutation dealing with connecting the first architecture, the second architecture and the third architecture in series and one combination has two models in parallel and one in series.

10. One or more non-transitory machine-readable information storage mediums comprising one or more instructions which when executed by one or more hardware processors cause:

receiving, via a user interface, historical data corresponding to a plurality of vehicles deployed in a network of the scheduled public transport, wherein a route in the network comprises a queried vehicle for which an expected arrival delay is to be predicted on a current stop;

deriving, spatial data, temporal data and spatio-temporal data from the received historical data corresponding to the plurality of vehicles and a plurality of stops present along the route;

identifying a first window of a set of stops from amongst the plurality of stops, wherein the set of stops are stops from where a trip of the queried vehicle has already completed;

identifying a second window of a set of vehicles of the current stop, wherein the set of vehicles of the current stop has passed through all the stops in the first window before the queried vehicle, wherein the set of vehicles are of a same mode that are in the second window based on a type of methods, wherein the type of methods comprises:

a route-based method, where the set of vehicles of the same mode has covered the same set of stops as the queried vehicle before the queried vehicle, and

a trip-based method, where the set of vehicles of the same mode has covered the same set of stops in the first window considered as the queried vehicle before the queried vehicle;

extracting a plurality of spatial features for each stop in the first window;

forming a spatial feature vector of a dimension of twice the number of stops in the first window using the plurality of spatial features;

extracting a plurality of temporal features for each stop in the first window covered by vehicles in the second window;

forming a temporal feature vector using the plurality of temporal features;

forming a spatio-temporal feature vector using a plurality of spatio-temporal features;

generating a first architecture of Fully Connected Neural Network 'FCNN', using the spatial feature vector;

generating a second architecture of a Long Short Term Memory 'LSTM' network using the temporal feature vector;

generating a third architecture of a 3D Convolutional Neural Network using the spatio-temporal feature vector;

training a plurality of final encoding models provided in a plurality of combinations of the first architecture, the second architecture and the third architecture;

choosing a final encoding model from amongst the plurality of final encoding models based on accuracy of each of the plurality of final encoding models; and

predicting a delay for the queried vehicle at the current stop using the final encoding model.

11. The one or more non-transitory machine-readable information storage mediums of claim 10 wherein, the plurality of temporal features is arranged in the order of route-based vehicles, trip-based vehicles, and the queried vehicle, wherein the arrangement results in the formation of the temporal feature vector.

12. The one or more non-transitory machine-readable information storage mediums of claim 10, wherein the plurality of spatial features comprises a distance between two consecutive stops, and a station vehicle capacity.

13. The one or more non-transitory machine-readable information storage mediums of claim 10, wherein the plurality of temporal features comprises a scheduled travel time between all consecutive stops in the first window before the current stop, a scheduled dwell time at a stop, a scheduled interval with preceding vehicle, a scheduled number of stops between a two consecutive stops in the first window, an actual travel time, an actual dwell time, and an actual interval with preceding vehicle for all consecutive stops in the first window.

14. The one or more non-transitory machine-readable information storage mediums of claim 10, wherein the plurality of spatio-temporal features comprises an arrival delay and a departure delay for each of the plurality of vehicles and for each of the plurality of stops, and wherein the plurality of combinations comprises seven combinations including six combinations have permutation dealing with connecting the first architecture, the second architecture and the third architecture in series and one combination has two models in parallel and one in series.

**Patentansprüche**

1. Prozessorimplementiertes Verfahren (400) zur Verzögerungsvorhersage für geplante öffentliche Verkehrsmittel, wobei das Verfahren Folgendes umfasst:

Empfangen, über eine Benutzerschnittstelle (104), von historischen Daten, die einer Mehrzahl von Fahrzeugen entsprechen, die in einem Netzwerk der geplanten öffentlichen Verkehrsmittel eingesetzt werden, wobei eine Route in dem Netzwerk ein abgefragtes Fahrzeug umfasst, für das eine erwartete Ankunftsverzögerung an einem aktuellen Halt vorhergesagt werden soll (402);

Ableiten, über einen oder mehrere Hardwareprozessoren (108), von räumlichen Daten, zeitlichen Daten und räumlich-zeitlichen Daten aus den empfangenen historischen Daten, die der Mehrzahl von Fahrzeugen und einer Mehrzahl von Halten entsprechen, die entlang der Route vorhanden sind (404);

Identifizieren, über den einen oder die mehreren Hardwareprozessoren (108), eines ersten Fensters eines Satzes von Halten aus der Mehrzahl von Halten, wobei der Satz von Halten Halte ist, von denen eine Fahrt des abgefragten Fahrzeugs bereits abgeschlossen ist (406);

Identifizieren, über den einen oder die mehreren Hardwareprozessoren (108), eines zweiten Fensters eines Satzes von Fahrzeugen des aktuellen Halts, wobei der Satz von Fahrzeugen des aktuellen Halts alle Halte in dem ersten Fenster vor dem abgefragten Fahrzeug durchlaufen hat, wobei der Satz von Fahrzeugen von einem gleichen Modus ist, die in dem zweiten Fenster sind, basierend auf einer Art von Verfahren, wobei die Art von Verfahren Folgendes umfasst:

ein routenbasiertes Verfahren, wobei der Satz von Fahrzeugen des gleichen Modus den gleichen Satz von Halten wie das abgefragte Fahrzeug vor dem abgefragten Fahrzeug abgedeckt hat, und

ein fahrbasiertes Verfahren, wobei der Satz von Fahrzeugen des gleichen Modus den gleichen Satz von Halten in dem ersten Fenster abgedeckt hat, das als das abgefragte Fahrzeug vor dem abgefragten Fahrzeug betrachtet wird (408);

Extrahieren, über den einen oder die mehreren Hardwareprozessoren (108), einer Mehrzahl von räumlichen Merkmalen für jeden Halt in dem ersten Fenster (410);

Bilden, über den einen oder die mehreren Hardwareprozessoren (108), eines räumlichen Merkmalsvektors einer Dimension von zweimal der Anzahl von Halten in dem ersten Fenster unter Verwendung der Mehrzahl von räumlichen Merkmalen (412);

Extrahieren, über den einen oder die mehreren Hardwareprozessoren (108), einer Mehrzahl von zeitlichen Merkmalen für jeden Halt in dem ersten Fenster, die von Fahrzeugen in dem zweiten Fenster abgedeckt sind (414);

Bilden, über den einen oder die mehreren Hardwareprozessoren (108), eines zeitlichen Merkmalsvektors unter Verwendung der Mehrzahl von zeitlichen Merkmalen (416);

Bilden, über den einen oder die mehreren Hardwareprozessoren (108), eines räumlich-zeitlichen Merkmalsvektors unter Verwendung einer Mehrzahl von räumlich-zeitlichen Merkmalen (418);

Erzeugen, über den einen oder die mehreren Hardwareprozessoren (108), einer ersten Architektur eines vollständig verbundenen neuronalen Netzwerks 'FCNN' unter Verwendung des räumlichen Merkmalsvektors (420);

Erzeugen, über den einen oder die mehreren Hardwareprozessoren (108), einer zweiten Architektur eines Long-Short-Term-Memory-Netzwerks 'LSTM' unter Verwendung des zeitlichen Merkmalsvektors (422);

Erzeugen, über den einen oder die mehreren Hardwareprozessoren (108), einer dritten Architektur eines 3D-Faltungsneuronalnetzwerks '3DCNN' unter Verwendung des räumlich-zeitlichen Merkmalsvektors (424);

Trainieren, über den einen oder die mehreren Hardwareprozessoren (108), einer Mehrzahl von endgültigen Codierungsmodellen, die in einer Mehrzahl von Kombinationen der ersten Architektur, der zweiten Architektur und der dritten Architektur bereitgestellt sind; (426)

Auswählen, über den einen oder die mehreren Hardwareprozessoren (108), eines endgültigen Codierungsmodells aus der Mehrzahl von endgültigen Codierungsmodellen basierend auf der Genauigkeit jedes der Mehrzahl von endgültigen Codierungsmodellen (428); und

Vorhersagen, über den einen oder die mehreren Hardwareprozessoren (108), einer Verzögerung für das abgefragte Fahrzeug an der aktuellen Haltestelle unter Verwendung des endgültigen Codierungsmodells (430).

2. Prozessorimplementiertes Verfahren nach Anspruch 1, wobei die Mehrzahl von zeitlichen Merkmalen in der Reihenfolge von routenbasierten Fahrzeugen, fahrbasierten Fahrzeugen und dem abgefragten Fahrzeug angeordnet ist, wobei die Anordnung zur Bildung des zeitlichen Merkmalsvektors führt.

3. Prozessorimplementiertes Verfahren nach Anspruch 1, wobei die Mehrzahl von räumlichen Merkmalen einen Abstand zwischen zwei aufeinanderfolgenden Haltestellen und eine Stationsfahrzeugkapazität umfasst.

4. Prozessorimplementiertes Verfahren nach Anspruch 1, wobei die Mehrzahl von zeitlichen Merkmalen eine geplante Fahrzeit zwischen allen aufeinanderfolgenden Haltestellen in dem ersten Fenster vor der aktuellen Haltestelle, eine geplante Verweilzeit an einer Haltestelle, ein geplantes Intervall mit vorausfahrendem Fahrzeug, eine geplante Anzahl von Haltestellen zwischen zwei aufeinanderfolgenden Haltestellen in dem ersten Fenster, eine tatsächliche Fahrzeit, eine tatsächliche Verweilzeit und ein tatsächliches Intervall mit vorausfahrendem Fahrzeug für alle aufeinanderfolgenden Haltestellen in dem ersten Fenster umfasst.

5. Prozessorimplementiertes Verfahren nach Anspruch 1, wobei die Mehrzahl von räumlich-zeitlichen Merkmalen eine Ankunftsverzögerung und eine Abfahrtsverzögerung für jedes der Mehrzahl von Fahrzeugen und für jede der Mehrzahl von Haltestellen umfasst, und wobei die Mehrzahl von Kombinationen sieben Kombinationen umfasst, einschließlich sechs Kombinationen, die eine Permutation aufweisen, die sich mit dem Verbinden der ersten Architektur, der zweiten Architektur und der dritten Architektur in Reihe befasst, und eine Kombination zwei parallele Modelle und eines in Reihe aufweist.

6. System (100) zur Verzögerungsvorhersage für geplante öffentliche Verkehrsmittel, wobei das System Folgendes umfasst:

   eine Benutzerschnittstelle (104) zum Empfangen von historischen Daten, die einer Mehrzahl von Fahrzeugen entsprechen, die in einem Netzwerk der geplanten öffentlichen Verkehrsmittel eingesetzt werden, wobei eine Route in dem Netzwerk ein abgefragtes Fahrzeug umfasst, für das eine erwartete Ankunftsverzögerung an einem aktuellen Halt vorhergesagt werden soll;
   einen oder mehrere Hardwareprozessoren (108);
   einen Speicher (110) in Kommunikation mit dem einen oder den mehreren Hardwareprozessoren, wobei der eine oder die mehreren Hardwareprozessoren konfiguriert sind, um programmierte Anweisungen auszuführen, die in dem einen oder den mehreren ersten Speichern gespeichert sind, um:

   räumliche Daten, zeitliche Daten und räumlich-zeitliche Daten aus den empfangenen historischen Daten abzuleiten, die der Mehrzahl von Fahrzeugen und einer Mehrzahl von Halten entsprechen, die entlang der Route vorhanden sind;
   ein erstes Fenster eines Satzes von Halten aus der Mehrzahl von Halten zu identifizieren, wobei der Satz von Halten Halte ist, von denen eine Fahrt des abgefragten Fahrzeugs bereits abgeschlossen ist;
   ein zweites Fenster eines Satzes von Fahrzeugen des aktuellen Halts zu identifizieren, wobei der Satz von Fahrzeugen des aktuellen Halts alle Halte in dem ersten Fenster vor dem abgefragten Fahrzeug durchlaufen hat, wobei der Satz von Fahrzeugen von einem gleichen Modus ist, die in dem zweiten Fenster sind, basierend auf einer Art von Verfahren, wobei die Art von Verfahren Folgendes umfasst:

   ein routenbasiertes Verfahren, wobei der Satz von Fahrzeugen des gleichen Modus den gleichen Satz von Halten wie das abgefragte Fahrzeug vor dem abgefragten Fahrzeug abgedeckt hat, und
   ein fahrbasiertes Verfahren, wobei der Satz von Fahrzeugen des gleichen Modus den gleichen Satz von Halten in dem ersten Fenster abgedeckt hat, das als das abgefragte Fahrzeug vor dem abgefragten Fahrzeug betrachtet wird;

   eine Mehrzahl von räumlichen Merkmalen für jeden Halt in dem ersten Fenster zu extrahieren;
   einen räumlichen Merkmalsvektor einer Dimension von zweimal der Anzahl von Halten in dem ersten Fenster unter Verwendung der Mehrzahl von räumlichen Merkmalen zu bilden;
   eine Mehrzahl von zeitlichen Merkmalen für jeden Halt in dem ersten Fenster, die von Fahrzeugen in dem zweiten Fenster abgedeckt sind, zu extrahieren;
   einen zeitlichen Merkmalsvektor unter Verwendung der Mehrzahl von zeitlichen Merkmalen zu bilden;
   einen räumlich-zeitlichen Merkmalsvektor unter Verwendung einer Mehrzahl von räumlich-zeitlichen Merkmalen zu bilden;
   eine erste Architektur eines vollständig verbundenen neuronalen Netzwerks 'FCNN' unter Verwendung des räumlichen Merkmalsvektors zu erzeugen;
   eine zweite Architektur eines Long-Short-Term-Memory-Netzwerks 'LSTM' unter Verwendung des zeitlichen Merkmalsvektors zu erzeugen;
   eine dritte Architektur eines 3D-Faltungsneuronalnetzwerks '3DCNN' unter Verwendung des räumlich-zeitlichen Merkmalsvektors zu erzeugen;
   eine Mehrzahl von endgültigen Codierungsmodellen, die in einer Mehrzahl von Kombinationen der ersten Architektur, der zweiten Architektur und der dritten Architektur bereitgestellt sind, zu trainieren;
   ein endgültiges Codierungsmodell aus der Mehrzahl von endgültigen Codierungsmodellen basierend auf der Genauigkeit jedes der Mehrzahl von endgültigen Codierungsmodellen auszuwählen; und

eine Verzögerung für das abgefragte Fahrzeug an der aktuellen Haltestelle unter Verwendung des endgültigen Codierungsmodells vorherzusagen.

7. System nach Anspruch 6, wobei die Mehrzahl von räumlichen Merkmalen einen Abstand zwischen zwei aufeinanderfolgenden Haltestellen und eine Stationsfahrzeugkapazität umfasst.

8. System nach Anspruch 6, wobei die Mehrzahl von zeitlichen Merkmalen eine geplante Fahrzeit zwischen allen aufeinanderfolgenden Haltestellen in dem ersten Fenster vor der aktuellen Haltestelle, eine geplante Verweilzeit an einer Haltestelle, ein geplantes Intervall mit vorausfahrendem Fahrzeug, eine geplante Anzahl von Haltestellen zwischen zwei aufeinanderfolgenden Haltestellen in dem ersten Fenster, eine tatsächliche Fahrzeit, eine tatsächliche Verweilzeit und ein tatsächliches Intervall mit vorausfahrendem Fahrzeug für alle aufeinanderfolgenden Haltestellen in dem ersten Fenster umfasst.

9. System nach Anspruch 6, wobei die Mehrzahl von räumlich-zeitlichen Merkmalen eine Ankunftsverzögerung und eine Abfahrtsverzögerung für jedes der Mehrzahl von Fahrzeugen und für jede der Mehrzahl von Haltestellen umfasst, und wobei die Mehrzahl von Kombinationen sieben Kombinationen umfasst, einschließlich sechs Kombinationen, die eine Permutation aufweisen, die sich mit dem Verbinden der ersten Architektur, der zweiten Architektur und der dritten Architektur in Reihe befasst, und eine Kombination zwei parallele Modelle und eines in Reihe aufweist.

10. Ein oder mehrere nichtflüchtige maschinenlesbare Informationsspeichermedien, die eine oder mehrere Anweisungen umfassen, die, wenn sie von einem oder mehreren Hardwareprozessoren ausgeführt werden, Folgendes bewirken:

Empfangen, über eine Benutzerschnittstelle, von historischen Daten, die einer Mehrzahl von Fahrzeugen entsprechen, die in einem Netzwerk der geplanten öffentlichen Verkehrsmittel eingesetzt werden, wobei eine Route in dem Netzwerk ein abgefragtes Fahrzeug umfasst, für das eine erwartete Ankunftsverzögerung an einem aktuellen Halt vorhergesagt werden soll;
Ableiten von räumlichen Daten, zeitlichen Daten und räumlich-zeitlichen Daten aus den empfangenen historischen Daten, die der Mehrzahl von Fahrzeugen und einer Mehrzahl von Halten entsprechen, die entlang der Route vorhanden sind;
Identifizieren eines ersten Fensters eines Satzes von Halten aus der Mehrzahl von Halten, wobei der Satz von Halten Halte ist, von denen eine Fahrt des abgefragten Fahrzeugs bereits abgeschlossen ist;
Identifizieren eines zweiten Fensters eines Satzes von Fahrzeugen des aktuellen Halts, wobei der Satz von Fahrzeugen des aktuellen Halts alle Halte in dem ersten Fenster vor dem abgefragten Fahrzeug durchlaufen hat, wobei der Satz von Fahrzeugen von einem gleichen Modus ist, die in dem zweiten Fenster sind, basierend auf einer Art von Verfahren, wobei die Art von Verfahren Folgendes umfasst:

ein routenbasiertes Verfahren, wobei der Satz von Fahrzeugen des gleichen Modus den gleichen Satz von Halten wie das abgefragte Fahrzeug vor dem abgefragten Fahrzeug abgedeckt hat, und
ein fahrbasiertes Verfahren, wobei der Satz von Fahrzeugen des gleichen Modus den gleichen Satz von Halten in dem ersten Fenster abgedeckt hat, das als das abgefragte Fahrzeug vor dem abgefragten Fahrzeug betrachtet wird;

Extrahieren einer Mehrzahl von räumlichen Merkmalen für jeden Halt in dem ersten Fenster;
Bilden eines räumlichen Merkmalsvektors einer Dimension von zweimal der Anzahl von Halten in dem ersten Fenster unter Verwendung der Mehrzahl von räumlichen Merkmalen;
Extrahieren einer Mehrzahl von zeitlichen Merkmalen für jeden Halt in dem ersten Fenster, die von Fahrzeugen in dem zweiten Fenster abgedeckt sind;
Bilden eines zeitlichen Merkmalsvektors unter Verwendung der Mehrzahl von zeitlichen Merkmalen;
Bilden eines räumlich-zeitlichen Merkmalsvektors unter Verwendung einer Mehrzahl von räumlich-zeitlichen Merkmalen;
Erzeugen einer ersten Architektur eines vollständig verbundenen neuronalen Netzwerks 'FCNN' unter Verwendung des räumlichen Merkmalsvektors;
Erzeugen einer zweiten Architektur eines Long-Short-Term-Memory-Netzwerks 'LSTM' unter Verwendung des zeitlichen Merkmalsvektors;
Erzeugen einer dritten Architektur eines 3D-Faltungsneuronalnetzwerks unter Verwendung des räumlich-zeitlichen Merkmalsvektors;
Trainieren einer Mehrzahl von endgültigen Codierungsmodellen, die in einer Mehrzahl von Kombinationen der ersten Architektur, der zweiten Architektur und der dritten Architektur bereitgestellt sind;
Auswählen eines endgültigen Codierungsmodells aus der Mehrzahl von endgültigen Codierungsmodellen basierend auf der Genauigkeit jedes der Mehrzahl von endgültigen Codierungsmodellen; und
Vorhersagen einer Verzögerung für das abgefragte Fahrzeug an der aktuellen Haltestelle unter Verwendung des endgültigen Codierungsmodells.

11. Ein oder mehrere nichtflüchtige maschinenlesbare Informationsspeichermedien nach Anspruch 10, wobei die Mehrzahl von zeitlichen Merkmalen in der Reihenfolge von routenbasierten Fahrzeugen, fahrbasierten Fahrzeugen und dem abgefragten Fahrzeug angeordnet ist, wobei die Anordnung zur Bildung des zeitlichen Merkmalsvektors führt.

12. Ein oder mehrere nichtflüchtige maschinenlesbare Informationsspeichermedien nach Anspruch 10, wobei die Mehrzahl von räumlichen Merkmalen einen Abstand zwischen zwei aufeinanderfolgenden Haltestellen und eine Stationsfahrzeugkapazität umfasst.

13. Ein oder mehrere nichtflüchtige maschinenlesbare Informationsspeichermedien nach Anspruch 10, wobei die Mehrzahl von zeitlichen Merkmalen eine geplante Fahrzeit zwischen allen aufeinanderfolgenden Haltestellen in dem ersten Fenster vor der aktuellen Haltestelle, eine geplante Verweilzeit an einer Haltestelle, ein geplantes Intervall mit vorausfahrendem Fahrzeug, eine geplante Anzahl von Haltestellen zwischen zwei aufeinanderfolgenden Haltestellen in dem ersten Fenster, eine tatsächliche Fahrzeit, eine tatsächliche Verweilzeit und ein tatsächliches Intervall mit vorausfahrendem Fahrzeug für alle aufeinanderfolgenden Haltestellen in dem ersten Fenster umfasst.

14. Ein oder mehrere nichtflüchtige maschinenlesbare Informationsspeichermedien nach Anspruch 10, wobei die Mehrzahl von räumlich-zeitlichen Merkmalen eine Ankunftsverzögerung und eine Abfahrtsverzögerung für jedes der Mehrzahl von Fahrzeugen und für jede der Mehrzahl von Haltestellen umfasst, und wobei die Mehrzahl von Kombinationen sieben Kombinationen umfasst, einschließlich sechs Kombinationen, die eine Permutation aufweisen, die sich mit dem Verbinden der ersten Architektur, der zweiten Architektur und der dritten Architektur in Reihe befasst, und eine Kombination zwei parallele Modelle und eines in Reihe aufweist.

## Revendications

1. Procédé mis en oeuvre par processeur (400) de prédiction de retard pour un transport public programmé, le procédé comprenant le fait de :

recevoir, par l'intermédiaire d'une interface utilisateur (104), des données historiques correspondant à une pluralité de véhicules déployés dans un réseau du transport public programmé, dans lequel un itinéraire dans le réseau comprend un véhicule interrogé pour lequel un retard d'arrivée attendu doit être prédit à un arrêt en cours (402) ;
dériver, par l'intermédiaire d'un ou plusieurs processeurs matériels (108), des données spatiales, des données temporelles et des données spatio-temporelles à partir des données historiques reçues correspondant à la pluralité de véhicules et à une pluralité d'arrêts présents le long de l'itinéraire (404) ;
identifier, par l'intermédiaire dudit un ou desdits plusieurs processeurs matériels (108), une première fenêtre d'un ensemble d'arrêts parmi la pluralité d'arrêts, dans lequel l'ensemble d'arrêts correspond à des arrêts à partir desquels un trajet du véhicule interrogé s'est déjà achevé (406) ;
identifier, par l'intermédiaire dudit un ou desdits plusieurs processeurs matériels (108), une deuxième fenêtre d'un ensemble de véhicules de l'arrêt en cours, dans lequel l'ensemble de véhicules de l'arrêt en cours est passé par tous les arrêts de la première fenêtre avant le véhicule interrogé, dans lequel l'ensemble de véhicules est d'un même mode qui se situe dans la deuxième fenêtre sur la base d'un type de procédés, dans lequel le type de procédés comprend :

un procédé à base d'itinéraire, où l'ensemble de véhicules du même mode a couvert le même ensemble d'arrêts que le véhicule interrogé avant le véhicule interrogé ; et
un procédé à base de trajet, dans lequel l'ensemble de véhicules du même mode a couvert le même ensemble d'arrêts dans la première fenêtre considérée que le véhicule interrogé avant le véhicule interrogé (408) ;

extraire, par l'intermédiaire dudit un ou desdits plusieurs processeurs matériels (108), une pluralité de caractéristiques spatiales pour chaque arrêt dans la première fenêtre (410) ;

former, par l'intermédiaire dudit un ou desdits plusieurs processeurs matériels (108), un vecteur de caractéristiques spatiales dont la dimension est égale à deux fois le nombre d'arrêts dans la première fenêtre à l'aide de la pluralité de caractéristiques spatiales (412) ;

extraire, par l'intermédiaire dudit un ou desdits plusieurs processeurs matériels (108), une pluralité de caractéristiques temporelles pour chaque arrêt dans la première fenêtre couvert par des véhicules dans la deuxième fenêtre (414) ;

former, par l'intermédiaire dudit un ou desdits plusieurs processeurs matériels (108), un vecteur de caractéristiques temporelles à l'aide de la pluralité de caractéristiques temporelles (416) ;

former, par l'intermédiaire dudit un ou desdits plusieurs processeurs matériels (108), un vecteur de caractéristiques spatio-temporelles à l'aide d'une pluralité de caractéristiques spatio-temporelles (418) ;

générer, par l'intermédiaire dudit un ou desdits plusieurs processeurs matériels (108), une première architecture de réseau de neurones entièrement connectés, « FCNN », à l'aide du vecteur de caractéristiques spatiales (420) ;

générer, par l'intermédiaire dudit un ou desdits plusieurs processeurs matériels (108), une deuxième architecture d'un réseau à mémoire à long et court terme, « LSTM », à l'aide du vecteur de caractéristiques temporelles (422) ;

générer, par l'intermédiaire dudit un ou desdits plusieurs processeurs matériels (108), une troisième architecture d'un réseau de neurones convolutif 3D, « 3DCNN », à l'aide du vecteur de caractéristiques spatio-temporelles (424) ;

entraîner, par l'intermédiaire dudit un ou desdits plusieurs processeurs matériels (108), une pluralité de modèles de codage final fournis dans une pluralité de combinaisons de la première architecture, de la deuxième architecture et de la troisième architecture (426) ;

choisir, par l'intermédiaire dudit un ou desdits plusieurs processeurs matériels (108), un modèle de codage final parmi la pluralité de modèles de codage final sur la base d'une précision de chaque modèle de la pluralité de modèles de codage final (428) ; et

prédire, par l'intermédiaire dudit un ou desdits plusieurs processeurs matériels (108), un retard pour le véhicule interrogé à l'arrêt en cours, à l'aide du modèle de codage final (430).

2. Procédé mis en oeuvre par processeur selon la revendication 1, dans lequel la pluralité de caractéristiques temporelles est agencée dans l'ordre de véhicules à base d'itinéraire, de véhicules à base de trajet, et du véhicule interrogé, dans lequel l'agencement se traduit par la formation du vecteur de caractéristiques temporelles.

3. Procédé mis en oeuvre par processeur selon la revendication 1, dans lequel la pluralité de caractéristiques spatiales comprend une distance entre deux arrêts consécutifs, et une capacité de véhicules de station.

4. Procédé mis en oeuvre par processeur selon la revendication 1, dans lequel la pluralité de caractéristiques temporelles comprend un temps de trajet programmé entre tous les arrêts consécutifs dans la première fenêtre avant l'arrêt en cours, un temps de séjour programmé à un arrêt, un intervalle programmé avec un véhicule précédent, un nombre programmé d'arrêts entre deux arrêts consécutifs dans la première fenêtre, un temps de trajet réel, un temps de séjour réel et un intervalle réel avec un véhicule précédent pour tous les arrêts consécutifs dans la première fenêtre.

5. Procédé mis en oeuvre par processeur selon la revendication 1, dans lequel la pluralité de caractéristiques spatio-temporelles comprend un retard d'arrivée et un retard de départ pour chaque véhicule de la pluralité de véhicules et pour chaque arrêt de la pluralité d'arrêts, et dans lequel la pluralité de combinaisons comprend sept combinaisons dans lesquelles six combinaisons présentent une permutation portant sur la connexion de la première architecture, de la deuxième architecture et de la troisième architecture en série, et une combinaison présente deux modèles en parallèle et un modèle en série.

6. Système (100) de prédiction de retard pour un transport public programmé, le système comprenant :

une interface utilisateur (104) destinée à recevoir des données historiques correspondant à une pluralité de véhicules déployés sur un réseau du transport public programmé, dans lequel un itinéraire dans le réseau comprend un véhicule interrogé pour lequel un retard d'arrivée attendu doit être prédit à un arrêt en cours ;

un ou plusieurs processeurs matériels (108) ;

une mémoire (110), en communication avec ledit un ou lesdits plusieurs processeurs matériels, dans lesquels ledit un ou lesdits plusieurs processeurs matériels sont configurés de manière à exécuter des instructions programmées stockées dans ladite une ou lesdites plusieurs mémoires, en vue de :

dériver des données spatiales, des données temporelles et des données spatio-temporelles à partir des données historiques reçues correspondant à la pluralité de véhicules et à une pluralité d'arrêts présents le long de l'itinéraire ;

identifier une première fenêtre d'un ensemble d'arrêts parmi la pluralité d'arrêts, dans lequel l'ensemble d'arrêts correspond à des arrêts à partir desquels un trajet du véhicule interrogé s'est déjà achevé ;

identifier une deuxième fenêtre d'un ensemble de véhicules de l'arrêt en cours, dans lequel l'ensemble de véhicules de l'arrêt en cours est passé par tous les arrêts de la première fenêtre avant le véhicule interrogé, dans lequel l'ensemble de véhicules est d'un même mode qui se situe dans la deuxième fenêtre sur la base d'un type de procédés, dans lequel le type de procédés comprend :

un procédé à base d'itinéraire, où l'ensemble de véhicules du même mode a couvert le même ensemble d'arrêts que le véhicule interrogé avant le véhicule interrogé ; et

un procédé à base de trajet, dans lequel l'ensemble de véhicules du même mode a couvert le même ensemble d'arrêts dans la première fenêtre considérée que le véhicule interrogé avant le véhicule interrogé ;

extraire une pluralité de caractéristiques spatiales pour chaque arrêt dans la première fenêtre ;

former un vecteur de caractéristiques spatiales dont la dimension est égale à deux fois le nombre d'arrêts dans la première fenêtre à l'aide de la pluralité de caractéristiques spatiales ;

extraire une pluralité de caractéristiques temporelles pour chaque arrêt dans la première fenêtre couvert par des véhicules dans la deuxième fenêtre ;

former un vecteur de caractéristiques temporelles à l'aide de la pluralité de caractéristiques temporelles ;

former un vecteur de caractéristiques spatio-temporelles à l'aide d'une pluralité de caractéristiques spatio-temporelles ;

générer une première architecture de réseau de neurones entièrement connectés, « FCNN », à l'aide du vecteur de caractéristiques spatiales ;

générer une deuxième architecture d'un réseau à mémoire à long et court terme, « LSTM », à l'aide du vecteur de caractéristiques temporelles ;

générer une troisième architecture d'un réseau de neurones convolutif 3D, « 3DCNN », à l'aide du vecteur de caractéristiques spatio-temporelles ;

entraîner une pluralité de modèles de codage final fournis dans une pluralité de combinaisons de la première architecture, de la deuxième architecture et de la troisième architecture ;

choisir un modèle de codage final parmi la pluralité de modèles de codage final sur la base d'une précision de chaque modèle de la pluralité de modèles de codage final ; et

prédire un retard pour le véhicule interrogé à l'arrêt en cours, à l'aide du modèle de codage final.

7. Système selon la revendication 6, dans lequel la pluralité de caractéristiques spatiales comprend une distance entre deux arrêts consécutifs, et une capacité de véhicules de station.

8. Système selon la revendication 6, dans lequel la pluralité de caractéristiques temporelles comprend un temps de trajet programmé entre tous les arrêts consécutifs dans la première fenêtre avant l'arrêt en cours, un temps de séjour programmé à un arrêt, un intervalle programmé avec un véhicule précédent, un nombre programmé d'arrêts entre deux arrêts consécutifs dans la première fenêtre, un temps de trajet réel, un temps de séjour réel, et un intervalle réel avec un véhicule précédent pour tous les arrêts consécutifs dans la première fenêtre.

9. Système selon la revendication 6, dans lequel la pluralité de caractéristiques spatio-temporelles comprend un retard d'arrivée et un retard de départ pour chaque véhicule de la pluralité de véhicules et pour chaque arrêt de la pluralité d'arrêts, et dans lequel la pluralité de combinaisons comprend sept combinaisons dans lesquelles six combinaisons présentent une permutation portant sur la connexion de la première architecture, de la deuxième architecture et de la troisième architecture en série, et une combinaison présente deux modèles en parallèle et un modèle en série.

10. Un ou plusieurs supports non transitoires de stockage d'informations lisibles par machine comprenant une ou plusieurs instructions qui, lorsqu'elles sont exécutées par un ou plusieurs processeurs matériels, occasionnent le fait de :

recevoir, par l'intermédiaire d'une interface utilisateur, des données historiques correspondant à une pluralité de véhicules déployés dans un réseau du transport public programmé, dans lequel un itinéraire dans le réseau comprend un véhicule interrogé pour lequel un retard d'arrivée attendu doit être prédit à un arrêt en cours ;

dériver des données spatiales, des données temporelles et des données spatio-temporelles à partir des données historiques reçues correspondant à la pluralité de véhicules et à une pluralité d'arrêts présents le long de l'itinéraire ;

identifier une première fenêtre d'un ensemble d'arrêts parmi la pluralité d'arrêts, dans lequel l'ensemble d'arrêts correspond à des arrêts à partir desquels un trajet du véhicule interrogé s'est déjà achevé ;

identifier une deuxième fenêtre d'un ensemble de véhicules de l'arrêt en cours, dans lequel l'ensemble de véhicules de l'arrêt en cours est passé par tous les arrêts de la première fenêtre avant le véhicule interrogé, dans lequel l'ensemble de véhicules est d'un même mode qui se situe dans la deuxième fenêtre sur la base d'un type de procédés, dans lequel le type de procédés comprend :

un procédé à base d'itinéraire, où l'ensemble de véhicules du même mode a couvert le même ensemble d'arrêts que le véhicule interrogé avant le véhicule interrogé ; et

un procédé à base de trajet, dans lequel l'ensemble de véhicules du même mode a couvert le même ensemble d'arrêts dans la première fenêtre considérée que le véhicule interrogé avant le véhicule interrogé ;

extraire une pluralité de caractéristiques spatiales pour chaque arrêt dans la première fenêtre ;

former un vecteur de caractéristiques spatiales dont la dimension est égale à deux fois le nombre d'arrêts dans la première fenêtre à l'aide de la pluralité de caractéristiques spatiales ;

extraire une pluralité de caractéristiques temporelles pour chaque arrêt dans la première fenêtre couvert par des véhicules dans la deuxième fenêtre ;

former un vecteur de caractéristiques temporelles à l'aide de la pluralité de caractéristiques temporelles ;

former un vecteur de caractéristiques spatio-temporelles à l'aide d'une pluralité de caractéristiques spatio-temporelles ;

générer, une première architecture de réseau de neurones entièrement connectés, « FCNN », à l'aide du vecteur de caractéristiques spatiales ;

générer une deuxième architecture d'un réseau à mémoire à long et court terme, « LSTM », à l'aide du vecteur de caractéristiques temporelles ;

générer une troisième architecture d'un réseau de neurones convolutif 3D, « 3DCNN », à l'aide du vecteur de caractéristiques spatio-temporelles ;

entraîner une pluralité de modèles de codage final fournis dans une pluralité de combinaisons de la première architecture, de la deuxième architecture et de la troisième architecture ;

choisir un modèle de codage final parmi la pluralité de modèles de codage final sur la base d'une précision de chaque modèle de la pluralité de modèles de codage final ; et

prédire un retard pour le véhicule interrogé à l'arrêt en cours, à l'aide du modèle de codage final.

11. Ledit un ou lesdits plusieurs supports non transitoires de stockage d'informations lisibles par machine selon la revendication 10, dans lesquels la pluralité de caractéristiques temporelles est agencée dans l'ordre de véhicules à base d'itinéraire, de véhicules à base de trajet, et du véhicule interrogé, dans lequel l'agencement se traduit par la formation du vecteur de caractéristiques temporelles.

12. Ledit un ou lesdits plusieurs supports non transitoires de stockage d'informations lisibles par machine selon la revendication 10, dans lesquels dans lequel la pluralité de caractéristiques spatiales comprend une distance entre deux arrêts consécutifs, et une capacité de véhicules de station.

13. Ledit un ou lesdits plusieurs supports non transitoires de stockage d'informations lisibles par machine selon la revendication 10, dans lesquels la pluralité de caractéristiques temporelles comprend un temps de trajet programmé entre tous les arrêts consécutifs dans la première fenêtre avant l'arrêt en cours, un temps de séjour programmé à un arrêt, un intervalle programmé avec un véhicule précédent, un nombre programmé d'arrêts entre deux arrêts consécutifs dans la première fenêtre, un temps de trajet réel, un temps de séjour réel et un intervalle réel avec un véhicule précédent pour tous les arrêts consécutifs dans la première fenêtre.

14. Ledit un ou lesdits plusieurs supports non transitoires de stockage d'informations lisibles par machine selon la revendication 10, dans lesquels la pluralité de caractéristiques spatio-temporelles comprend un retard d'arrivée et un retard de départ pour chaque véhicule de la pluralité de véhicules et pour chaque arrêt de la pluralité d'arrêts, et dans lequel la pluralité de combinaisons comprend sept combinaisons dans lesquelles six combinaisons présentent une permutation portant sur la connexion de la première architecture, de la deuxième architecture et de la troisième architecture en série, et une combinaison présente deux modèles en parallèle et un modèle en série.

FIG. 1

FIG. 2

FIG. 3A

FIG. 3B

FIG. 3C

FIG. 3D

FIG. 3E

FIG. 3F

FIG. 3G

400

Receive historical data corresponding to a plurality of vehicles deployed on a network of the scheduled public transport, wherein a route in the network comprises a queried vehicle for which an expected arrival delay is to be predicted on a current stop — 402

Derive spatial data, temporal data and spatio-temporal data from the received historical data corresponding to the plurality of vehicles and a plurality of stops present along the route — 404

Identify a first window of a set of stops from amongst the plurality of stops, wherein the set of stops are consecutive stops from where a trip of the queried vehicle has already completed — 406

identify a 2nd window of a set of vehicles of current stop, wherein the set of vehicles of the current stop has passed through all stops in the 1st window before the queried vehicle, wherein the set of vehicles are of same mode that are in the 2nd window based on a type of methods, the type of methods comprises: a route-based method, where the set of vehicles of the same mode has covered the same set of stops as the queried vehicle before the queried vehicle, and a trip-based method, where the set of vehicles of the same mode has covered the same set of stops in the 1st window considered as the queried vehicle before the queried vehicle — 408

Extract spatial features for each stop in the first window — 410

Form a spatial feature vector of a dimension of twice the number of stops in the first window using the plurality of spatial features — 412

(A)

FIG. 4A

400

(A)

| Extract a plurality of temporal features for each stop in the 1st window covered by the vehicles in the 2nd window | 414 |

| Form a temporal feature vector using the plurality of temporal features | 416 |

| Form a spatio-temporal feature vector using a plurality of spatio-temporal features | 418 |

| Generate a first architecture of fully connected neural network (FCNN), using the spatial feature vector | 420 |

| Generate a second architecture of a long short term memory (LSTM) network using the temporal feature vector | 422 |

| Generate a third architecture of a 3D convolutional neural network (3DCNN) using the spatio-temporal feature vector | 424 |

| Train a plurality of final encoding models provided in combinations of 1st architecture, 2nd architecture & 3rd architecture | 426 |

| Choose a final encoding model from amongst the plurality of final encoding models based on accuracy of each final encoding models | 428 |

| Predict a delay for the queried vehicle at the current stop using the final encoding model | 430 |

FIG. 4B

## REFERENCES CITED IN THE DESCRIPTION

**Patent documents cited in the description**

- IN 202221054665

**Non-patent literature cited in the description**

- A deep learning approach for multi-attribute data: A study of train delay prediction in railway systems. **HUANG PING et al.** INFORMATION SCIENCES. ELSEVIER, 25 December 2019, vol. 516, 234-253

- Train Delay Prediction based on a Multimodal Deep-learning Method. **CHEN SHUAI et al.** 2021 CHINA AUTOMATION CONGRESS (CAC). IEEE, 22 October 2021, 3241-3246
- Bus Arrival Time Prediction Based on LSTM and Spatial-Temporal Feature Vector. **LIU HONGUJIE et al.** IEEE ACCESS. IEEE, 08 January 2020, vol. 8, 11917-11929